# EUROPEAN PATENT SPECIFICATION

(11) **EP 4 327 256 B1**
(45) Date of publication and mention of the grant of the patent: **27.05.2026**
(21) Application number: 22790621.1
(22) Date of filing: 30.03.2022
(51) Int. Cl.: G06Q 10/087, G06T 7/00

(54) **VALIDATING ELEMENTS DISPLAYED ON A DISPLAY FIXTURE**
VALIDIERUNG VON ELEMENTEN AUF EINEM REGAL
VALIDATION D'ÉLÉMENTS PRÉSENTÉS SUR UN PRÉSENTOIR

(30) Priority: 21.04.2021 US 202163177659 P; 11.06.2021 US 202163209768 P
(43) Date of publication of application: 28.02.2024
(73) Proprietor: Unefi Inc., Toronto, ON M5J 2P1 (CA)
(72) Inventor: DIMIC, Ranko, Toronto, Ontario M5A 1P6 (CA); SZANTO, Tibor, Toronto, Ontario M5A 1P6 (CA); VISE, Samuel Arthur, Toronto, Ontario M5A 1P6 (CA)
(74) Representative: Gunzelmann, Rainer
(86) International application number: PCT/CA2022/050482
(87) International publication number: WO 2022/221935

(56) References cited:
- US-A1- 2008 306 787
- US-A1- 2012 290 544
- US-A1- 2017 011 498
- US-A1- 2017 011 498
- US-A1- 2017 206 547
- US-A1- 2017 206 547
- US-A1- 2019 005 288
- US-A1- 2020 013 007

## Description

### TECHNICAL FIELD

The present invention relates to management systems. More specifically, the present invention relates to systems and methods for managing fixtures for displaying retail items as well as advertising related items.

### BACKGROUND

The continuing technological and communications revolution of the past decade has made management tasks much easier. With a few clicks of a mouse button, managers can call up inventory levels and plans for warehouses and locations many thousands of miles from one another. The same is true for brand managers and advertising specialists. With a few clicks of a mouse button, a new advertising campaign and new branding can be launched.

However, while launching advertising and branding campaigns has been made easier, managing and ensuring that those campaigns are being followed might be slightly more difficult. Other than sending managers to the varied locations where a campaign is being implemented to thereby check on the implementation, there might not be a way to remotely ensure that matters are being handled properly. The issue may lie in how marketing and branding campaigns are implemented, whether the proper advertising is being used properly, whether the proper items are placed in the proper locations, etc.

While detailed instructions and detailed packages may be sent out to implement campaigns, implementation of these instructions is usually left to the individual location. Thus, while one location may follow instructions very closely, another location may follow them haphazardly.

There is therefore a need for systems, methods, and processes that allow managers to remotely ensure that locations are implementing product, advertising, and brand placement instructions correctly. Preferably, such systems and methods would allow different locations to be held to the same standards. As well, it is preferred if such systems and methods are simple to implement/operate.

US 2008/306787 A1 discloses a method and a system for measuring retail store display compliance through automated, digital image capture and analysis. The system includes an image capture unit used at a retail store containing one or more product displays. The image capture unit is configured to capture images of product displays and transmit the captured images together with related information to a processing location. The processing location includes an image recognition module configured to process the captured images. A mobile capture unit, as the image capture unit, is described to capture images of retail store conditions, process the captured images, and transmit the captured images to a processing location.

US 2020/013007 A1 discloses a method for tracking placement of products in a store includes accessing an image recorded by a mobile robotic system within a store; detecting a shelf in a region of the image; based on an address of the shelf, retrieving a list of products assigned to the shelf by a planogram of the store; retrieving a set of template images-from a database of template images-defining visual features of products specified in the list of products; extracting a set of features from the region of the image; determining that a unit of the product is mis-stocked on the shelf in response to deviation between the set of features and features in a template image, in the set of template images, representing the product; and in response to determining that the unit of the product is mis-stocked on the shelf, generating a restocking prompt for the product.

### SUMMARY

According to the present invention, a method validating elements displayed on a fixture is set forth in claim 1. Preferred embodiments are provided in the dependent claims. The present invention provides systems and methods relating to validating elements expected to be displayed on a display fixture. A digital image of the fixture or of each element displayed on the fixture is taken by a user. This digital image is then compared with stored images of the elements expected to be displayed on the fixture. For elements whose digital image matches its corresponding stored image, meaning that the element is present on the fixture, the element is designated as valid. In one variant, a digital image of the fixture is taken and portions are matched with the stored images of the expected elements. If the stored image of an element matches a portion of the digital image of the fixture, then that element is designated as being valid and present on the fixture.

In a first aspect, the present invention provides a method for validating elements displayed on a fixture, the method comprising:
a) receiving identification data that identifies a specific fixture in a retail establishment;
b) retrieving a listing of elements expected to be displayed on said specific fixture;
c) retrieving stored images of elements that are listed in said listing of elements retrieved in step b);
d) displaying a stored image of a specific element to a user, said specific element being in said listing retrieved in step b);
e) instructing said user to take a digital image of said specific element as said specific element is displayed on said specific fixture;
f) receiving a received image of said specific element as said specific element is displayed on said specific fixture;
g) comparing said received image of said specific element with a stored image of said specific element as retrieved in step c);
h) when comparison results from step g) indicates that said received image is acceptable, designating said specific element as valid;
i) repeating steps d) - h) for each element in said listing.

The present invention may be implemented such that step (e) further comprises prompting said user to mark said specific element as invalid when said specific element is not displayed on said specific fixture.

The present invention may be implemented such that said listing and said stored images are retrieved from a database remote from said user.

The present invention may be implemented such that step (g) comprises uploading said received image and said stored image to a remote server such that said remote server produces said comparison results that indicate whether said received image is sufficiently similar to said stored image.

The present invention may be implemented such that for step (h), said received image is acceptable when said received image is similar to said stored image by at least a certain percentage.

The present invention may be implemented such that when more than one instance of said specific element is expected to be displayed on said specific fixture, said user is provided with instructions on which instance is to be imaged by said user.

The present invention may be implemented such that when more than one instance of said specific element is expected to be displayed on said specific fixture, each instance of said specific element is treated as a separate element.

The present invention may be implemented such that said user is provided with an annotated listing of elements once all elements on said listing have been designated valid or invalid.

The present invention may be implemented such that each element to be designated as invalid is confirmed by said user as not being on said fixture.

In a second aspect, the present invention provides a method for validating elements displayed on a fixture, the method comprising:
a) receiving identification data that identifies a specific fixture in a retail establishment;
b) retrieving a listing of elements expected to be displayed on said specific fixture;
c) retrieving stored images of elements that are listed in said listing of elements retrieved in step b);
d) instructing a user to take a digital image of said specific fixture showing elements displayed on said specific fixture;
e) receiving from said user a received image of said specific fixture in response to instructions in step d);
f) selecting a specific element listed in said listing;
g) determining if said specific element is present in said received image by matching a stored image of said specific element with a portion of said received image;
h) when said portion of said received image matches said stored image of said specific element, designating said specific element as being valid;
i) repeating steps f) to h) for each element in said listing.

The present invention may be implemented such that when no portion of said received image matches said stored image of said specific element, designating said specific element as being invalid.

The present invention may be implemented such that said listing and said stored images are retrieved from a database remote from said user.

The present invention may be implemented such that step (g) comprises uploading said received image and said stored image of said specific element to a remote server such that said remote server produces comparison results that indicate whether said stored image matches said portion of said received image.

The present invention may be implemented such that step (g) comprises applying an overlay to said received image to thereby separate specific portions of said received image and comparing said stored image of said specific element with only those specific portions of said received image.

The present invention may be implemented such that step (g) comprises:
g1) uploading said stored image of said specific element and one of said specific portions to a remote server to compare said stored image of said specific element and said one of said specific portions and, for each specific portion, producing comparison results to indicate whether said stored image of said specific element matches said specific portion; g2) repeating step (g1) for each specific portion of said received image such that each specific portion of said received image is compared with said stored image of said specific element.

The present invention may be implemented such that said received image is a video image.

The present invention may further comprise displaying said received image to said user and marking elements designated as valid.

The present invention may further comprise displaying said received image to said user and marking elements not designated as valid.

The present invention may be implemented such that when multiple instances of an element are expected to be present on said fixture, each instance of said element is handled as if it was a separate element that is distinct from other instances of said element.

A further aspect of the present invention provides a method for validating elements found on an item, the method comprising:
a) receiving identification data that identifies a specific item;
b) retrieving a listing of elements expected to be found on said specific item;
c) retrieving stored images of elements that are listed in said listing of elements retrieved in step (b);
d) displaying a stored image of a specific element to a user, said specific element being in said listing retrieved in step (b);
e) instructing said user to take a digital image of said specific element as said specific element is displayed on said specific item;
f) receiving a received image of said specific element as said specific element is found on said specific item;
g) comparing said received image of said specific element with a stored image of said specific element as retrieved in step (c);
h) when comparison results from step (g) indicates that said received image is acceptable, designating said specific element as valid;
i) repeating steps (d) - (h) for each element in said listing.

Yet another aspect of the present invention provides a method for validating elements displayed on an item, the method comprising:
a) receiving identification data that identifies a specific item;
b) retrieving a listing of elements expected to be present on said specific item;
c) retrieving stored images of elements that are listed in said listing of elements retrieved in step (b);
d) instructing a user to take a digital image of said specific item showing elements present on said specific item;
e) receiving from said user a received image of said specific item in response to instructions in step (d);
f) selecting a specific element listed in said listing;
g) determining if said specific element is present in said received image by matching a stored image of said specific element with a portion of said received image;
h) when said portion of said received image matches said stored image of said specific element, designating said specific element as being valid;
i) repeating steps (f) to (h) for each element in said listing.

Another aspect of the present invention provides a method for validating elements present on an item, the method comprising:
a) receiving identification data that identifies a specific item;
b) retrieving a listing of elements expected to be present on said specific item;
c) retrieving stored images of elements that are listed in said listing of elements retrieved in step (b);
d) instructing a user to take a digital image of said specific item showing elements present on said specific item;
e) receiving from said user a received image of said specific item in response to instructions in step (d);
f) designating specific areas on said item as storage slots and determining which elements are expected to be in said storage slots based on said listing of elements;
g) comparing a portion of said received image with a stored image of a specific element expected to be in a specific storage slot, said portion of said received image corresponding to an area for said specific storage slot;
h) designating said specific element as being valid when said portion of said received image matches said stored image of said specific element;
i) repeating steps (g) to (h) for each element in said listing and for each storage slot in said item.

The present invention may be implemented such that wherein a user device used in said method operates in an off-line mode such that a communications link between said user device and a server storing said stored images is unnecessary to execute said method.

The present invention may be implemented such that said digital image is extracted from a video feed from a user device used to execute at least a portion of said method.

The present invention may further comprise, after executing step i), presenting an image of said specific item detailing at least one of said elements in said listing as being on said specific item, said at least one of said elements being overlaid with an indication as to whether said at least one element has been validated.

The present invention may be implemented such that said image of said specific item is a composite of digital images captured by said user as said method is executed.

The present invention may be implemented such that after said method is executed, details regarding which elements are valid is uploaded from a user device used to execute at least a portion of said method is uploaded to a remote server.

The present invention may be implemented such that said specific item is a storage fixture in a retail environment.

The various methods of the invention may include prompting the user to mark the specific element as invalid when the specific element is not displayed on the specific fixture. As well, the listing and the stored images may be retrieved from a database remote from the user.

The methods may also involve uploading the received image and the stored image to a remote server such that the remote server produces the comparison results that indicate whether the received image is sufficiently similar to the stored image. Furthermore, the received image may be deemed acceptable when the received image is similar to the stored image by at least a certain percentage. Also, when more than one instance of the specific element is expected to be displayed on the specific fixture, the user is provided with instructions on which instance is to be imaged by the user. In addition, when more than one instance of the specific element is expected to be displayed on the specific fixture, each instance of the specific element is treated as a separate element.

In one variant of the present invention, the invention involves applying an overlay to the received image to thereby separate specific portions of the received image and comparing the stored image of the specific element with only those specific portions of the received image.

In addition, other variants of the invention may involve uploading the stored image of the specific element and one of the specific portions to a remote server to compare the stored image of the specific element and one of the specific portions and, for each specific portion, producing comparison results to indicate whether the stored image of the specific element matches the specific portion. The process may also involve repeating specific steps for each specific portion of the received image such that each specific portion of the received image is compared with the stored image of the specific element.

It should be clear that the received image may be a video image and that the process may include displaying the received image to the user and marking elements designated as valid. In addition, the process may include displaying the received image to the user and marking elements that have not been designated as valid.

In a further aspect, this document discloses non-transitory computer readable media having encoded thereon computer readable and computer executable instructions that, when executed by at least one processor, implement a method for validating elements displayed on a fixture, the method comprising: a) receiving identification data that identifies a specific fixture in an establishment; b) retrieving a listing of elements expected to be displayed on said specific fixture; c) retrieving stored images of elements that are listed in said listing of elements retrieved in step (b); d) displaying a stored image of a specific element to a user, said specific element being in said listing retrieved in step (b); e) instructing said user to take a digital image of said specific element as said specific element is displayed on said specific fixture; f) receiving a received image of said specific element as said specific element is displayed on said specific fixture; g) comparing said received image of said specific element with a stored image of said specific element as retrieved in step (c); h) when comparison results from step (g) indicates that said received image is acceptable, designating said specific element as valid; i) repeating steps (d) - (h) for each element in said listing.

In a further aspect, this document discloses non-transitory computer readable media having encoded thereon computer readable and computer executable instructions that, when executed by at least one processor, implement a method for validating elements displayed on a fixture, the method comprising: a) receiving identification data that identifies a specific fixture in an establishment; b) retrieving a listing of elements expected to be displayed on said specific fixture; c) retrieving stored images of elements that are listed in said listing of elements retrieved in step (b); d) instructing a user to take a digital image of said specific fixture showing elements displayed on said specific fixture; e) receiving from said user a received image of said specific fixture in response to instructions in step (d); f) selecting a specific element listed in said listing; g) determining if said specific element is present in said received image by matching a stored image of said specific element with a portion of said received image; h) when said portion of said received image matches said stored image of said specific element, designating said specific element as being valid; i) repeating steps (f) to (h) for each element in said listing.

In a further aspect, this document discloses non-transitory computer readable media having encoded thereon computer readable and computer executable instructions that, when executed by at least one processor, implement a method for validating elements found on an item, the method comprising: a) receiving identification data that identifies a specific item; b) retrieving a listing of elements expected to be found on said specific item; c) retrieving stored images of elements that are listed in said listing of elements retrieved in step (b); d) displaying a stored image of a specific element to a user, said specific element being in said listing retrieved in step (b); e) instructing said user to take a digital image of said specific element as said specific element is displayed on said specific item; f) receiving a received image of said specific element as said specific element is found on said specific item; g) comparing said received image of said specific element with a stored image of said specific element as retrieved in step (c); h) when comparison results from step (g) indicates that said received image is acceptable, designating said specific element as valid; i) repeating steps (d) - (h) for each element in said listing.

In a further aspect, this document discloses non-transitory computer readable media having encoded thereon computer readable and computer executable instructions that, when executed by at least one processor, implement a method for validating elements displayed on an item, the method comprising: a) receiving identification data that identifies a specific item; b) retrieving a listing of elements expected to be present on said specific item; c) retrieving stored images of elements that are listed in said listing of elements retrieved in step (b); d) instructing a user to take a digital image of said specific item showing elements present on said specific item; e) receiving from said user a received image of said specific item in response to instructions in step (d); f) selecting a specific element listed in said listing; g) determining if said specific element is present in said received image by matching a stored image of said specific element with a portion of said received image; h) when said portion of said received image matches said stored image of said specific element, designating said specific element as being valid; i) repeating steps (f) to (h) for each element in said listing.

In a further aspect, this document discloses non-transitory computer readable media having encoded thereon computer readable and computer executable instructions that, when executed by at least one processor, implement a method for validating elements present on an item, the method comprising: a) receiving identification data that identifies a specific item; b) retrieving a listing of elements expected to be present on said specific item; c) retrieving stored images of elements that are listed in said listing of elements retrieved in step (b); d) instructing a user to take a digital image of said specific item showing elements present on said specific item; e) receiving from said user a received image of said specific item in response to instructions in step (d); f) designating specific areas on said item as storage slots and determining which elements are expected to be in said storage slots based on said listing of elements; g) comparing a portion of said received image with a stored image of a specific element expected to be in a specific storage slot, said portion of said received image corresponding to an area for said specific storage slot; h) designating said specific element as being valid when said portion of said received image matches said stored image of said specific element; i) repeating steps (g) to (h) for each element in said listing and for each storage slot in said item.

### BRIEF DESCRIPTION OF THE DRAWINGS

The embodiments of the present invention will now be described by reference to the following figures, in which identical reference numerals in different figures indicate identical elements and in which:
**FIGURE 1A** is a block diagram of a system according to one aspect of the present invention;
**FIGURE 1B** shows a sample user interface detailing a stored image and instructions to a user;
**FIGURES 2A** **and** **2B** **are** sample digital images taken by a user and in which specific storage locations have been designated as valid while others have been designated as invalid;
**FIGURE 3** is a flowchart detailing the steps in a method according to one aspect of the present invention; and
**FIGURE 4** shows a final confirmation screen showing the fixture with the various elements being overlaid with indications as to whether each element has been validated or not.

### DETAILED DESCRIPTION

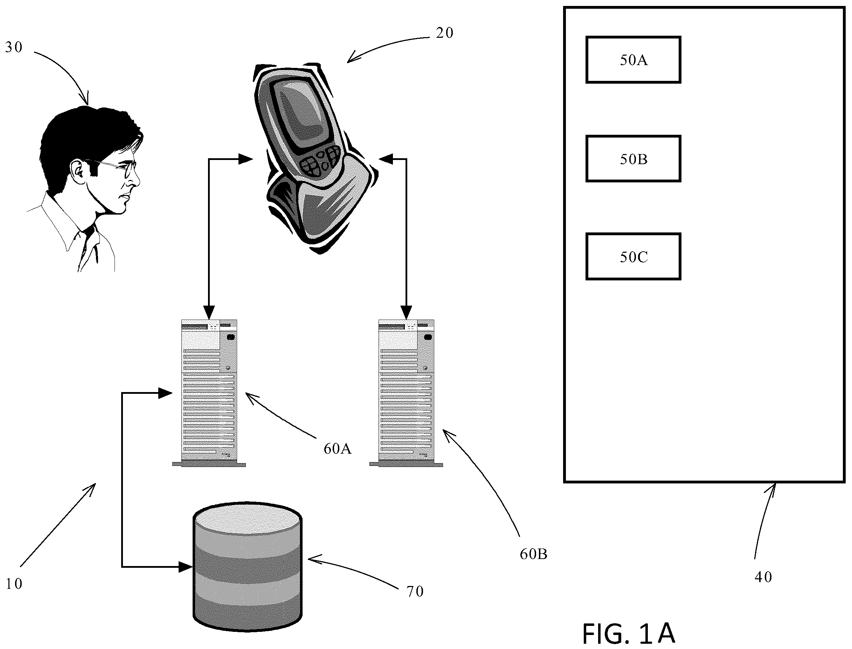

Referring to Figure 1A, a system according to one aspect of the present invention is illustrated. As can be seen, the system 10 includes a user device 20 used by a user 30. The user device 20 is used to image a subject. That subject may be a fixture 40 that contains/displays elements 50A, 50B, 50C. The user device 20 may be in communication with a server 60A and, optionally, a server 60B. A database 70 is in communication with server 60A.

In operation, the user device 20 is used to scan /receive data relating to fixture 40. This data may take the form of an identification tag or a bar code scanned using the user device 20. The data scanned/received by the user device 20 uniquely identifies the fixture 40. The identity of fixture 40 may be unique within the retail establishment in which the fixture 40 resides or the identity may be unique across the overall system. The identity serves to identify the fixture 40 so that data relating to the fixture 40 may be retrieved by the user device 20 from the database 70 by way of the server 60A. The data retrieved from database 70 includes a listing of elements that is expected to be displayed on the fixture 40.

Once the data from database 70 is retrieved, the listing of elements expected to be displayed on the fixture 40 is used to retrieve stored images of these elements from the database 70. These stored images, once retrieved, can be stored on the user device 20.

The listing of elements expected to be displayed on the fixture 40 and the stored images of these elements are then used to determine if the elements are indeed present on the fixture. It should be clear that the characteristics of the fixture (i.e., size, number of locations for placement of elements, potential configurations of the fixture) is known and may be used to populate the database with different listings of elements for display on the fixture. Thus, even if a fixture A in location A1 has the same physical characteristics as fixture B in location B1, the elements for display on fixture A may be quite different from the elements for display on fixture B. It is for this reason that a fixture is uniquely identified so that the proper listing of elements for that fixture may be retrieved.

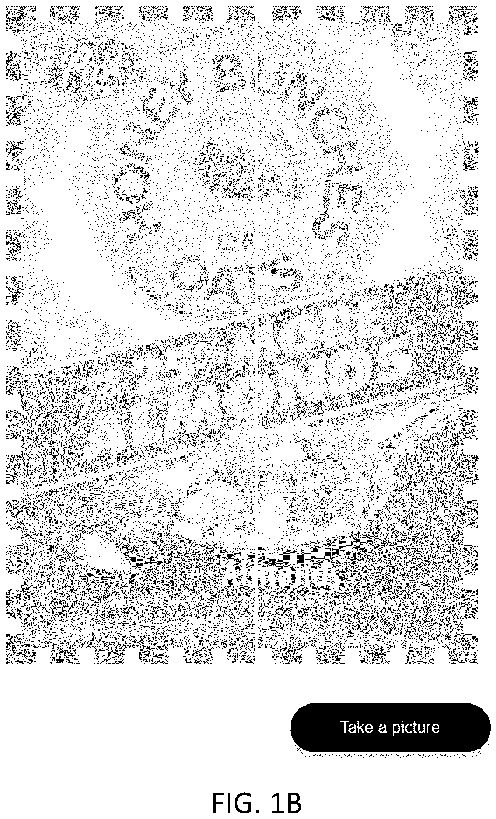

In one implementation of the present invention, once the listing of elements has been retrieved by the user device 20 from the database 70 by way of server 60A, the user is provided with instructions to take digital images of the elements on the fixture 40. This is done by providing detailed instructions to the user by way of the user device's user interface. A specific element found in the listing of elements is selected and the stored image for this specific element is displayed to the user. Along with the stored image, the user is directed to locate this specific element on the fixture and to take a digital image of that specific element. A sample portion of a user interface showing a stored image and instructions to a user is shown in Figure 1B. As can be seen, the stored image shows what the user should be looking for in the fixture and the instruction to take a picture of the item/element is clear from Figure 1B.

Once the digital image of that specific element has been taken and the digital image received as a received image, the digital image is compared with the stored image for that specific element to determine if there is a match or, absent an exact match, whether there is sufficient similarity between the two images to conclude that a match is likely. This comparison can be accomplished using the user device or the user device may upload the stored image and the received image of the specific element to server 60B for the comparison. It should be clear that digital image comparison is well-known in the art and a person skilled in the art is sufficiently well-versed to use suitable software and hardware to produce code that performs this function on the user device. Alternatively, the user device may automatically outsource this comparison to a server 60B (perhaps through a suitable website) so that the server 60B can perform that comparison and provide comparison results to the user device. The comparison results may take the form of a percentage or likelihood that the two images (the stored image and the received image) are of the same or similar objects.

After the comparison, the comparison results provide an indication whether the item/element that the user has taken a digital image of matches the stored image of the specific element expected to be displayed on the fixture. If the indication is that there is a match (or at least enough of an indication as to be considered a match depending on the implementation), then the specific element may be designated as being valid. This designation as being valid may be recorded/placed on the listing of elements retrieved from the database or it may be placed on a copy of that listing on the user device. It should be clear that, in this context, a valid designation indicates or confirms that that specific element was found on the fixture on the data that the check was conducted on the fixture's elements.

It should be clear that, if there is an insufficient indication of a match on the comparison results, the system may be configured such that the user is prompted to take one or more subsequent digital images of the same specific element. This would ensure that, if one digital image is unclear or improperly taken, subsequent digital images may provide a better digital image. If, however, even after multiple attempts at matching the received image with the stored image, the user may be provided the option to simply designate the specific element as being invalid.

As an alternative, when the user is provided with the stored image of the specific element and is prompted to take a digital image of the specific element, the user may, at the same time, be provided with the option to mark that specific element as being invalid. Such a designation of invalid, even before a digital image is received, may occur if the user cannot find an item on the fixture that corresponds to the stored image of the specific element. Thus, if the stored image shows a specific brand and model of a packaged set of ear buds and the fixture only has packaged full sized headphones, the user may designate that specific element of ear buds as being invalid. Such a designation of invalidity serves as an indication that that specific element was not found on the fixture or that a suitable image of the specific element could not be taken by the user. As an option, each designation of invalidity may be accompanied by a text box in which the user can detail why the specific element/item was marked as invalid. Accordingly, the user may detail that the specific element was not in the fixture or that the specific element's image could not match the stored image of that specific element.

Once a specific element has been designated as being valid or invalid (i.e., essentially present or absent in the fixture), the next specific element in the listing is selected. The process then begins anew and is repeated for each of the elements in the listing of elements.

According to the present invention, the user device is configured to pre-retrieve the listing and the stored images. Thus, instead of having the user device retrieve the listing and the stored images when necessary from the database 70 by way of server 60A, the user device already has the listing and the relevant stored images in its own internal database. Prior to validating the elements in various fixtures in an establishment, a user may pre-download all the listings for the various fixtures in an establishment along with the relevant stored images. The user can thus perform the validation of the various elements for the various fixtures without the need to be in communication with the servers or the database as the data and images it may need have already been pre-retrieved into its own database. As well, instead of off-loading the comparison function noted above (i.e., comparing the received image and the stored image), the user device performs the comparison function itself. This allows the user device to, once the listing and the stored images have been pre-retrieved, operate in an off-line mode while still validating the elements in various fixtures. With this variant of the present invention, the user device is in on-line mode initially to download or pre-retrieve the listing and the stored images from the online database to its internal database. Then, once the download or pre-retrieval is complete, the user device operates in off-line mode to validate the elements in various fixtures. When an online connection is available, the results of the validation can be uploaded or sent to the online database.

For clarity, there are times when a fixture may have more than one instance of a specific element. As an example, a fixture may have two exact same posters, with one being displayed on the left side of the fixture and one being on the right side of the fixture. To handle such possibilities, each specific element would be listed as a separate element in the listing of elements. Thus, instead of only one poster, there would be a listing of two posters, even if these elements would be the same. When detailing which specific element to take a digital image of, the user may be provided with details of the placement of the element being addressed. Thus, the detailed instructions for taking a digital image of the poster on the left may take the form of TAKE A DIGITAL IMAGE OF THIS ELEMENT ON THE LEFT while showing a stored image of the poster. Similarly, for taking a digital image of the poster on the right, the instructions may take the form of TAKE A DIGITAL IMAGE OF THIS ELEMENT ON THE RIGHT while showing the same stored image of the poster. Thus, for multiple instances of the same element, each instance is handled/dealt with as if each instance was a separate and different element. It should be clear that the stock keeping unit (SKU) code for each element in a fixture is different and this allows for the differentiation between multiple instances of the same item on the same fixture. Thus, if element A is a poster in the left side of the fixture while element B is an exact same poster on the right side of the same fixture, these elements would have different SKU codes. The instructions to the user may therefore be tied to the SKU codes so that the proper instructions are presented to the user when necessary. As well, the SKU codes would, in essence, be an implicit code for the placement of the item in the fixture.

Once all the elements on the listing have been designated valid or invalid, the user may be presented with a copy of the listing along with the designation for each element as well as reasons why invalid elements were designated as invalid. The user may then confirm the annotated listing and, once confirmed, the annotated listing of validity or invalidity may be uploaded to the server or sent to a central office.

As can be seen, if all the elements in a listing have been marked valid, then all the elements required on the fixture are present. However, for listings with invalid elements, the invalid elements will need to be addressed as these may be missing.

In another implementation, instead of instructing the user to take digital images of each element in the fixture, the user is instructed to take a digital image of the whole fixture with all the elements preferably in view. The digital image of the whole fixture is then analyzed, and the stored image of each element is used as the basis for searching for the specific element on the image of the fixture.

It should be clear that, for this implementation, the listing of elements, as well as the stored images of the various elements in the listing of elements, is still downloaded/retrieved from the database. After the listing of elements and the stored images have been retrieved, the user is instructed to take a digital image of the fixture with all the elements in the shot. The digital image taken is then received as a received image.

After the received image is received, one of the stored images for a specific element in the listing of elements is selected. This stored image is then used as the template to determine if any portion of the received image matches the stored image. A match between a portion of the received image and the stored image indicates that the specific element is present in the fixture. The system thus tries to match the stored image with any portion of the received image. This matching may occur at the user device or the user device may upload the received image and the stored image to the server 60B for matching *(i.e.,* not just comparison). Preferably, if a match is generated, the section or portion of the received image where the match is made is blocked off so that subsequent matching efforts do not need to take into account the portions of the received image that have already been previously matched.

Once a stored image has been matched with a portion of the received image, then the specific element for that matched stored image is designated as being valid. A next specific element from the listing is then selected and the corresponding stored image for that specific element is used to try and match a portion of the received image. The process continues until the stored images for all the elements in the listing have been matched with a portion of the received image.

It should, however, be clear that, if after a predetermined number of attempts at matching a stored image with the received image, no match has been generated, the user may be alerted. This alert would indicate that a match could not be found, and the user is prompted to find the specific element being searched for on the fixture. A prompt to designate that specific element as being invalid may be provided to the user, especially if the user cannot find the specific element on the fixture.

To assist in the matching process, an overlay may be applied to the received image. Since the characteristics of the fixture are known beforehand, a preconfigured overlay may be provided. The overlay could be configured to delineate/divide the fixture in the received image into the various locations/sections where the elements may be placed/located. Each location where an element may be located would be separated from adjacent locations by lines in the overlay so that, instead of attempting to match a stored image with all the possible permutations of where the element may be located, the stored image is only compared with the portion of the received image that is delineated by the bounding lines in the overlay. Thus, if the fixture has, for example, five bays at the top where an element may be located, the overlay would clearly place bounding boxes around each bay so that the area for each bay is clearly delineated. Thus, instead of attempting to match a stored image with the areas between the bays (or portions thereof), the stored image is only compared to the areas that are delineated as being within a specific bay.

To further assist in the above matching process, the user device may separate the received image into specific portions or regions, each portion or region being delineated by the overlay and corresponding to a possible storage location for an element. The portion to be compared and the stored image to be compared with are both compared or uploaded to the server 60B. A match indicates that the specific element is found in that storage location. A non-match indicates that the specific element is not found in that storage location.

To better confirm a match or a non-match, the system may indicate to the user the portion or region delineated by the overlay and the stored image of the specific element. The user would then be prompted to confirm whether the specific element is in that specific storage location or not. For this variant, the user is only provided with the received image *(i.e.,* the digital image that the user took) with the suitable overlay (and perhaps a highlighted portion of the overlay) and the stored image of the specific element. A prompt may detail what the system found, and the user simply has to confirm whether the system's finding was correct or not. As an example, the user would be shown the specific storage location on the received image and the stored image of the specific element. The user would be prompted with "ITEM X WAS FOUND TO BE IN LOCATION Y IN THE FIXTURE AS SHOWN. PLEASE CONFIRM THAT ITEM X IS IN LOCATION Y." Or, if the specific element was not found, then the user would be prompted with "ITEM X WAS NOT FOUND IN LOCATION Y IN THE FIXTURE AS SHOWN. PLEASE CONFIRM THAT ITEM X IS NOT IN LOCATION Y."

It should be clear that if a specific element was not found in the fixture, the user can be prompted to confirm that the element was not found in the fixture. If the user confirms that the specific element was not in the fixture, then that specific element is designated as being invalid. The designation of a specific element as being invalid (i.e., not present on the fixture or having an issue with the digital image) can trigger multiple actions and/or options. As an example, a service ticket may be automatically generated if an element is declared invalid. Or, alternatively, an automated reminder or alert to the user or to someone else (e.g., an automated email) may be generated to ensure that the user (or management) addresses the issue of a missing/problematic element.

Again, to address the possibility that multiple instances of a specific element are present on the fixture, each instance is handled/dealt with as if it was a separate element. Any storage locations that already correspond with a previous element is, preferably, marked as being occupied by an element. Thus, as more and more elements are declared valid and their location documented, then fewer comparisons need to be made between a storage location and a stored image.

As noted above, the comparison and/or matching step may be accomplished on the user device or it may be outsourced to a server 60B by the user device 20 uploading the images to be compared. If the comparison is to be executed remotely from the user device, the user device may simply upload the stored image and the portion of the received image that corresponds to the storage location to the server 60B. The server 60B then compares the two images and, if there is a match, then the comparison result would indicate that the specific element is to be found in that specific storage location on the fixture.

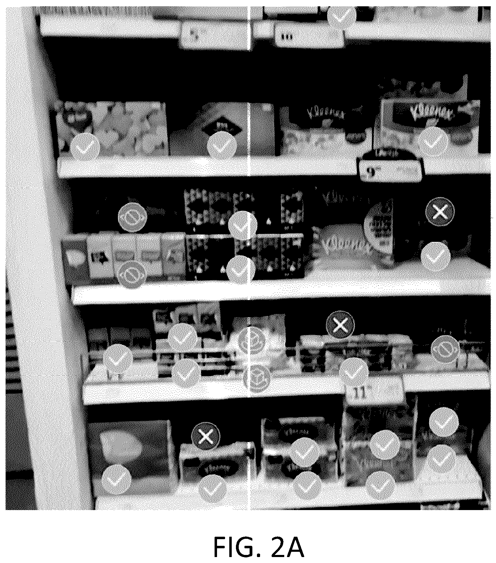

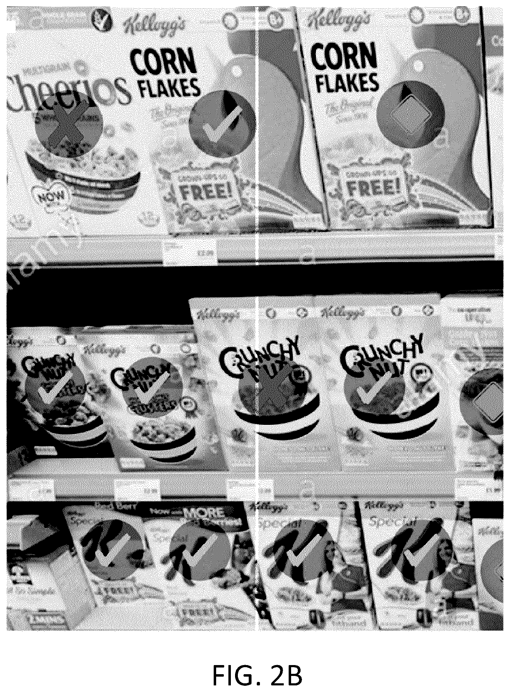

To assist the user in understanding the validation process, the user may be presented with the received image with a suitable overlay detailing the storage locations on the fixture. Each storage location with a corresponding valid element may be marked as such. For example, these storage elements would be marked with a green check mark. However, each storage location without a valid element would be marked with a red X. This would indicate that either the storage location has not been checked against all possible elements in the listing or that whatever element is located in the storage location is not listed in the listing. A sample image for such a marked up received image is illustrated in Figure 2A. Another similar sample image for such a received image is shown in Figure 2B. It should be clear from Figures 2A and 2B that, other than a check mark or a red X, other marks may be applied to the various elements shown in the received image.

The system and methods of the present invention is also used in confirming or ensuring the conformity of fixtures to a predefined configuration. This means that the system and methods can be used to ensure that the elements expected in the fixture are not only there but are actually placed in the correct spots. To perform this, the user is prompted to take a digital image of the fixture that, preferably, shows all the elements on the fixture. As above, an overlay is applied to the received image of the whole fixture, with the overlay delineating and separating the various storage slots on the fixture. Each storage slot is labeled with the overlay and the received image is shown to the user (with or without the overlay and the labels). For this implementation, the listing of elements expected on the fixture have labels associated with each element, each label denoting which storage slot or space each element is supposed to be stored in. The system then checks/compares the item found in each storage slot (as seen in the received image) with the stored image for that item. If there is a match between the portion of the received image corresponding to that specific storage slot and the stored image of the expected element for that same specific storage slot, then that element in the listing is designated as valid. If, of course, there is no match between the portion of the received image corresponding to the specific storage slot and the stored image for the expected element, then that element in the listing is designated as being invalid. Once all the elements in the listing have been designated as being valid *(i.e.,* the expected elements are all in their expected storage slots), then the fixture can be considered compliant to the expected/desired configuration as denoted by the listing of elements. Of course, if any elements are designated as being invalid, other steps may be taken, including generating one or more service tickets for the invalid items or alerting the user. Alternatively, the user could also be given an option to override the system and just mark the element as being valid, regardless of the image taken or the presence or absence of the element. Of course, for this alternative, the user would, in essence, be taking responsibility for overriding the system's findings about that particular element.

As a variant of the above implementation, the user may be instructed to take a digital image of a specific storage slot and that digital image can be compared with the stored image of the expected element that, according to the listing, should be stored in that storage slot. Once the digital image of that storage slot has been compared and found to match the stored image of the expected element, the system can then designate that element as being valid.

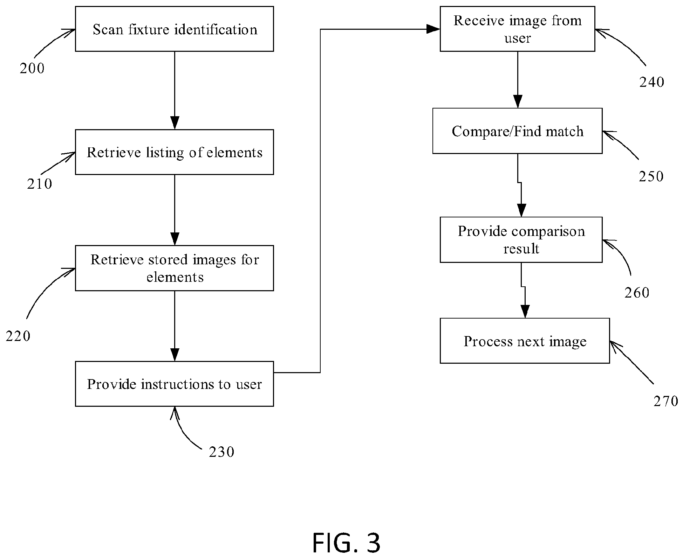

Referring to Figure 3, a flowchart for one aspect of the present invention is illustrated. As can be seen, the flowchart details the steps executed for validating elements displayed on a fixture. The process begins at step 200, that of scanning or otherwise obtaining the identification data that uniquely identifies the fixture. Step 210 is that of retrieving the listing of the elements expected to be displayed on the uniquely identified fixture. For step 220, the stored images of the elements listed in the listing are retrieved. Instructions are then provided to the user in step 230. As noted above, depending on the implementation, the instructions could be to take a digital image of a specific element displayed on the fixture or it could be to take a digital image of the whole fixture itself with the elements being visible. In step 240, the digital image is then received from the user. Step 250 is that of comparing or matching the received image with the stored image. Again as noted above, depending on the implementation, this could mean comparing the received image with the stored image of the specific element or finding a portion of the received image (of the whole fixture) that matches the stored image. Once a match is found or if the comparison is completed, step 250 is that of providing the comparison result *(i.e.,* the images match within acceptable limits or the images do not match) or the match between a portion of the received image and the stored image. Once this step is done, the next step (step 270) is that of processing the next image in the sequence. For the implementation that involves taking a digital image of the whole fixture, the next image is the next stored image that must be found in the received image. For the implementation where each stored image is compared with a received image of a specific element, the next image is a combination of the stored image of the next specific element and the received image of this next specific element. Of course, a further step would be to designate/label the relevant element as being valid or invalid, based on user input and/or the comparison results.

It should be clear that the system may perform some image manipulation on the received image to render the received image more useful for the comparison/analysis. As such, the received image may undergo rotations, translations, image sharpening, mirroring, and other possible image manipulation/enhancements. Such steps can enhance the received image so that the comparison/matching steps are more easily accomplished.

It must be noted that while the description uses the term "stored image" for the stored image for a specific element, this includes the concept that multiple stored images may be used for a specific element. Thus, a specific element may have 3-5 stored images corresponding to it, with each stored image being an image of a different viewpoint/perspective for the specific element. Thus, when comparing the received image with the stored image (or images) of a specific element, the received image is compared with all of the stored images for that specific element. As well, when attempting to find a match between the stored image (or images) of a specific element and one or more portions of the digital image of the fixture, the attempt includes trying to match the various views/images of the specific element with the multiple/various sections or portions of the fixture.

While the above description details taking a digital image of a fixture, this can mean taking a digital image of the whole fixture. However, it should be clear that this can mean taking a digital image of a specific portion or part of the larger fixture. Thus, as an example, if the data from the scanned code identifying the fixture denotes a large shelf unit with an array of 10 storage slots in a row and 5 storage slots per column, this means 50 storage slots. The system can instruct the user to take a digital image of the first 3 columns so that the resulting digital image images 15 storage slots. The listing of elements may include only the elements in these 15 storage slots, or it may include elements for all 50 storage slots. Regardless of the listing downloaded, the system would only analyze these 15 storage slots. Once these have been addressed *(i.e.,* the elements in the 15 storage slots have been designated valid or invalid), the user would then be instructed to take a digital image of the next 15 storage slots. The process can then continue until all 50 storage slots (and their elements) have been addressed/analyzed. Thus, the system can be configured to split/divide a fixture into multiple sections and each section can be imaged/analyzed on its own separately until the complete fixture has been addressed.

In one variant of the present invention, instead of taking still digital images, the present invention may be implemented to use digital video (i.e., moving digital images). Thus, instead of instructing the user to take a digital still image of an element, the user may be instructed to simply turn on the digital video camera on the user device and point the user device at a specific element or at the fixture as a whole. From the digital video, digital video still images can then be extracted/captured and these video still images can be used in place of the digital images noted above. It should, of course, be clear that multiple video still images may be used from the video feed as necessary to obtain the desired digital images to be used as noted above.

It should also be clear that, while the above description refers to stored images that are compared to the digital images captured by the user device and that the stored images can be pre-retrieved or pre-downloaded, representations of these stored images may be used in some implementations of the present invention. For such an implementation, the stored images can be represented using data that preserves the information stored in the stored image and which can be compared with the images captured using the user device. Vector graphics or other compression-based technologies may be used to store the information in the stored image so that this information can be compared to the images captured by the user device. It should be clear that the use of such compression technologies may be due to reducing the storage needs on the user device when the user device is pre-retrieving or downloading the stored images. The representations of the stored images can thus be compared with the images captured by the user device or, alternatively, the captured images can be converted into similar representations and these representations can be compared directly. As can be imagined, the comparisons would be performed to determine if the element whose image was captured by the user device corresponds to the expected element in the fixture.

As another variant of the present invention, after the various elements in the fixture has been validated (or not validated), the user may be presented with a composite of the fixture as it has been validated. An image of the fixture as imaged by the user device can be presented to the user with the various storage slots (or elements) being marked with a check or an X to indicate a validated element or a non-validated element. The image may be an image of the fixture as taken by the user device overlaid with the suitable checks or X's as necessary to indicate specific elements that have been validated or specific elements that did not pass validation. Alternatively, the user may be presented with a composite of the various images of the elements as imaged by the user device when the user was prompted to take those images. For this implementation, an image for a specific element, as taken by the user, is placed in a suitable location in a mock-up of the fixture and the image is overlaid with a suitable visual indication as to whether the element was validated or not (i.e., whether it was present or not). This process of collating the various images for the various elements continues until all the elements in the fixture are represented and the resulting composite is provided to the user.

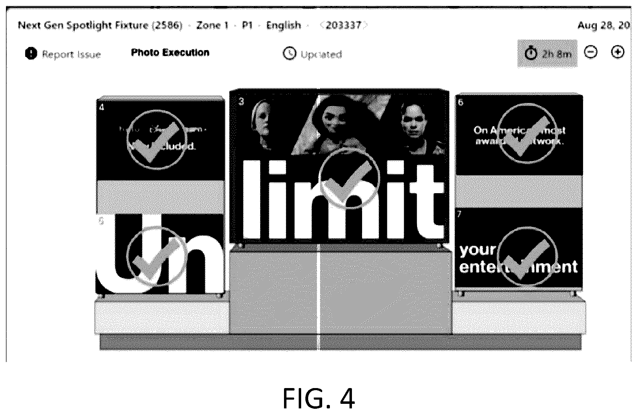

After the user is presented with the image of either the composite or the image of the fixture as a whole, with suitable overlays, the user can be asked to confirm that the image conforms to what the user sees in front of him or her. This step can operate as a final confirmation as to the actual configuration of the fixture as the user sees. A further indication to the user that the image is a composite of the user taken images or that the image is that of the fixture as imaged by the user can also be presented. Once the user has confirmed the validated / non-validated elements of the fixture as a whole, the results of the validation can be finalized and/or stored or uploaded as necessary. Figure 4 shows a screenshot of such a confirmation image showing a whole fixture with the various elements being overlaid with visual indications as to whether that image was validated or not. As should be clear, the image presented to the user is the fixture as the user sees the fixture and is not the fixture's configuration as desired.

It should be clear that the fixtures may be display stands or display units and the elements for display on these fixtures may include banners, posters, signs, as well as demonstration products, mock-ups of products, handouts, flyers, and promotional giveaways (e.g., stickers, refrigerator magnets, pens, executive toys, and the like). In addition to these elements, actual products may form part of the elements to be displayed on the fixtures. It should also be clear that, by the term "fixtures" what is meant are "display fixtures" on which products, advertising, and promotional materials may be displayed. Such products, advertising, and promotional materials may form at least part of the elements for display on the fixture.

As known in the field, each display fixture may have a number of display element locations and these display element locations are where the elements or display elements are placed/located. The various elements may have differing physical characteristics even if the elements may look similar. As an example, a display element may be a sign promoting a sale on a specific item or service. The sign may have a number of formats or sizes and these different formats or sizes may be suited for one or more display element locations on the display fixture. For clarity, each element on the listing of elements noted above may be denoted by a description of the physical characteristics of the element in addition to the stored image for that specific element. As an example, posters that are identical except for size would have the same or very similar stored images. The physical description would assist the user in determining which poster is being referenced when instructions regarding such posters are provided to the user.

In addition, the user device may be any preferably portable user digital processing device. These may include tablets, smartphones, or any other such devices.

For clarity, the various embodiments and implementations of the present invention may be incorporated into larger systems for inventory management as well as for advertising and brand management. The various methods and systems may be applied to one or more inventory management/tracking systems and may be implemented in contexts other than retail/advertising. As an example, the methods and systems may be adjusted such that the fixture is a larger component or larger system with multiple sub-components or sub-systems. Each sub-component or subsystem can then be an element that can be listed in the listing and be imaged and whose presence can be validated/confirmed or not.

It should be clear that the various aspects of the present invention may be implemented as software modules in an overall software system. As such, the present invention may thus take the form of computer executable instructions that, when executed, implements various software modules with predefined functions.

Additionally, it should be clear that, unless otherwise specified, any references herein to 'image' or to 'images' refer to a digital image or to digital images, comprising pixels or picture cells. Likewise, any references to an 'audio file' or to 'audio files' refer to digital audio files, unless otherwise specified. 'Video', 'video files', 'data objects', 'data files' and all other such terms should be taken to mean digital files and/or data objects, unless otherwise specified.

The embodiments of the invention may be executed by a computer processor or similar device programmed in the manner of method steps or may be executed by an electronic system which is provided with means for executing these steps. Similarly, an electronic memory means such as computer diskettes, CD-ROMs, Random Access Memory (RAM), Read Only Memory (ROM) or similar computer software storage media known in the art, may be programmed to execute such method steps. As well, electronic signals representing these method steps may also be transmitted via a communication network.

Embodiments of the invention may be implemented in any conventional computer programming language. For example, preferred embodiments may be implemented in a procedural programming language *(e.g.,* "C" or "Go") or an object-oriented language *(e.g.,* "C++", "java", "PHP", "PYTHON" or "C#"). Alternative embodiments of the invention may be implemented as pre-programmed hardware elements, other related components, or as a combination of hardware and software components.

Embodiments can be implemented as a computer program product for use with a computer system. Such implementations may include a series of computer instructions fixed either on a tangible medium, such as a computer readable medium *(e.g.,* a diskette, CD-ROM, ROM, or fixed disk) or transmittable to a computer system, via a modem or other interface device, such as a communications adapter connected to a network over a medium. The medium may be either a tangible medium (e.g., optical or electrical communications lines) or a medium implemented with wireless techniques (e.g., microwave, infrared or other transmission techniques). The series of computer instructions embodies all or part of the functionality previously described herein. Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies. It is expected that such a computer program product may be distributed as a removable medium with accompanying printed or electronic documentation (e.g., shrink-wrapped software), preloaded with a computer system *(e.g.,* on system ROM or fixed disk), or distributed from a server over a network (e.g., the Internet or World Wide Web). Of course, some embodiments of the invention may be implemented as a combination of both software *(e.g.,* a computer program product) and hardware. Still other embodiments of the invention may be implemented as entirely hardware, or entirely software *(e.g.,* a computer program product).

A person understanding this invention may now conceive of alternative structures and embodiments or variations of the above within the scope of the invention as defined in the claims that follow.

## Claims

1. A method for validating elements displayed on a fixture, the method comprising:
(a) receiving identification data that identifies a specific fixture in an establishment;
(b) retrieving a listing of elements expected to be displayed on said specific fixture; wherein the listing of elements expected on the fixture has labels associated with each element, each label denoting which storage slot or space each element is supposed to be stored in;
(c) retrieving stored images of elements that are listed in said listing of elements retrieved in step (b);
(d) instructing a user to take a digital image of the fixture that shows all the elements on the fixture;
(e) applying an overlay to the digital image of the whole fixture, with the overlay delineating and separating the various storage slots on the fixture;
(f) comparing the item found in each storage slot, as seen in the digital image, with the stored image for that item;
(g) when comparison results from step (f) indicates that there is a match between the portion of the digital image corresponding to that specific storage slot and the stored image of the expected element for that same specific storage slot, then that element in the listing is designated as valid, and when said comparison results indicate that there is no match between the portion of the received image corresponding to the specific storage slot and the stored image for the expected element, then that element in the listing is designated as being invalid; and
(h) repeating steps (f) - (g) for each element in said listing,
wherein a user device implementing the method is configured to pre-retrieve the listing and the stored images,
wherein the user device performs the comparison function in step (f), and
wherein the user device operates, once the listing and the stored images have been pre-retrieved, in an off-line mode while still validating the elements in various fixtures.

2. The method according to claim 1, wherein, for step (g), there is a match when said portion of the digital image is similar to said stored image by at least a certain percentage.

3. The method according to claim 1, wherein when more than one instance of said specific element is expected to be displayed on said specific fixture, each instance of said specific element is treated as a separate element.

4. The method according to claim 1, wherein said user is provided with an annotated listing of elements once all elements on said listing have been designated valid or invalid.

5. The method according to claim 1, wherein each element to be designated as invalid is confirmed by said user as not being on said fixture.

6. The method according to claim 1, wherein the user device is in on-line mode to pre-retrieve the listing of stored images and once pre-retrieval is complete, the user device operates in off-line mode.

7. The method of claim 6, wherein when an online connection is available, the results of the validation are uploaded or sent to an online database.

## Patentansprüche

1. Ein Verfahren zum Validieren von auf einem Warenträger angezeigten Elementen, wobei das Verfahren umfasst:
(a) Empfangen von Identifikationsdaten, die einen spezifischen Warenträger in einem Geschäft identifizieren;
(b) Abrufen einer Auflistung von Elementen, von denen erwartet wird, dass sie auf besagtem spezifischen Warenträger angezeigt werden; wobei die Auflistung von Elementen, die auf dem Warenträger erwartet werden, mit jedem Element verknüpfte Kennzeichnungen aufweist, wobei jede Kennzeichnung angibt, in welchem Lagerfach oder Platz jedes Element gespeichert sein soll;
(c) Abrufen gespeicherter Bilder von Elementen, die in besagter in Schritt (b) abgerufenen Auflistung von Elementen aufgeführt sind;
(d) Anweisen eines Benutzers, ein digitales Bild des Warenträgers aufzunehmen, das alle Elemente auf dem Warenträger zeigt;
(e) Anwenden einer Überlagerung auf das digitale Bild des gesamten Warenträgers, wobei die Überlagerung die verschiedenen Lagerfächer auf dem Warenträger abgrenzt und trennt;
(f) Vergleichen des in jedem Lagerfach gefundenen Artikels, wie in dem digitalen Bild zu sehen, mit dem gespeicherten Bild für diesen Artikel;
(g) wenn Vergleichsergebnisse aus Schritt (f) anzeigen, dass eine Übereinstimmung zwischen dem Teil des digitalen Bildes, der diesem spezifischen Lagerfach entspricht, und dem gespeicherten Bild des erwarteten Elements für dasselbe spezifische Lagerfach vorliegt, dann wird jenes Element in der Auflistung als gültig bezeichnet, und wenn besagte Vergleichsergebnisse anzeigen, dass keine Übereinstimmung zwischen dem Teil des empfangenen Bildes, der dem spezifischen Lagerfach entspricht, und dem gespeicherten Bild für das erwartete Element vorliegt, dann wird jenes Element in der Auflistung als ungültig bezeichnet; und
(h) Wiederholen der Schritte (f) - (g) für jedes Element in besagter Auflistung,
wobei eine Benutzervorrichtung, die das Verfahren implementiert, so konfiguriert ist, dass sie die Auflistung und die gespeicherten Bilder im Voraus abruft,
wobei die Benutzervorrichtung die Vergleichsfunktion in Schritt (f) durchführt, und
wobei die Benutzervorrichtung, sobald die Auflistung und die gespeicherten Bilder im Voraus abgerufen worden sind, in einem Offline-Modus arbeitet, während sie die Elemente in verschiedenen Warenträgern dennoch validiert.

2. Das Verfahren nach Anspruch 1, wobei für Schritt (g) eine Übereinstimmung vorliegt, wenn besagter Teil des digitalen Bildes besagtem gespeicherten Bild um mindestens einen bestimmten Prozentsatz ähnlich ist.

3. Das Verfahren nach Anspruch 1, wobei, wenn mehr als eine Instanz besagten spezifischen Elements erwartet wird, auf besagtem spezifischen Warenträger angezeigt zu werden, jede Instanz besagten spezifischen Elements als separates Element behandelt wird.

4. Das Verfahren nach Anspruch 1, wobei besagtem Benutzer eine annotierte Auflistung von Elementen bereitgestellt wird, sobald alle Elemente auf besagter Auflistung als gültig oder ungültig bezeichnet worden sind.

5. Das Verfahren nach Anspruch 1, wobei jedes als ungültig zu bezeichnende Element von besagtem Benutzer bestätigt wird, als nicht auf besagtem Warenträger befindlich.

6. Das Verfahren nach Anspruch 1, wobei die Benutzervorrichtung in einem Online-Modus ist, um die Auflistung gespeicherter Bilder im Voraus abzurufen, und wobei die Benutzervorrichtung, sobald der Abruf im Voraus abgeschlossen ist, in einem Offline-Modus arbeitet.

7. Das Verfahren nach Anspruch 6, wobei, wenn eine Online-Verbindung verfügbar ist, die Ergebnisse der Validierung in eine Online-Datenbank hochgeladen oder an diese gesendet werden.

## Revendications

1. Un procédé pour valider des éléments affichés sur un présentoir, le procédé comprenant :
(a) la réception de données d'identification qui identifient un présentoir spécifique dans un établissement ;
(b) la récupération d'une liste d'éléments devant être affichés sur ledit présentoir spécifique ; dans lequel la liste d'éléments attendus sur le présentoir comporte des étiquettes associées à chaque élément, chaque étiquette indiquant dans quelle fente ou quel emplacement de stockage chaque élément est censé être stocké ;
(c) la récupération d'images stockées d'éléments qui sont listés dans ladite liste d'éléments récupérée à l'étape (b) ;
(d) l'instruction à un utilisateur de prendre une image numérique du présentoir qui montre tous les éléments sur le présentoir ;
(e) l'application d'une superposition à l'image numérique du présentoir entier, la superposition délimitant et séparant les diverses fentes de stockage sur le présentoir ;
(f) la comparaison de l'article trouvé dans chaque fente de stockage, comme vu dans l'image numérique, avec l'image stockée pour cet article ;
(g) lorsque des résultats de comparaison de l'étape (f) indiquent qu'il existe une correspondance entre la portion de l'image numérique correspondant à cette fente de stockage spécifique et l'image stockée de l'élément attendu pour cette même fente de stockage spécifique, alors cet élément dans la liste est désigné comme valide, et lorsque lesdits résultats de comparaison indiquent qu'il n'existe pas de correspondance entre la portion de l'image reçue correspondant à la fente de stockage spécifique et l'image stockée pour l'élément attendu, alors cet élément dans la liste est désigné comme étant invalide ; et
(h) la répétition des étapes (f) - (g) pour chaque élément dans ladite liste,
dans lequel un dispositif utilisateur mettant en œuvre le procédé est configuré pour pré-récupérer la liste et les images stockées,
dans lequel le dispositif utilisateur exécute la fonction de comparaison de l'étape (f), et dans lequel le dispositif utilisateur fonctionne, une fois que la liste et les images stockées ont été pré-récupérées, dans un mode hors ligne tout en validant encore les éléments dans divers présentoirs.

2. Le procédé selon la revendication 1, dans lequel, pour l'étape (g), il existe une correspondance lorsque ladite portion de l'image numérique est similaire à ladite image stockée d'au moins un certain pourcentage.

3. Le procédé selon la revendication 1, dans lequel, lorsque plus d'une occurrence dudit élément spécifique doit être affichée sur ledit présentoir spécifique, chaque occurrence dudit élément spécifique est traitée comme un élément séparé.

4. Le procédé selon la revendication 1, dans lequel ledit utilisateur reçoit une liste annotée d'éléments une fois que tous les éléments de ladite liste ont été désignés comme valides ou invalides.

5. Le procédé selon la revendication 1, dans lequel chaque élément devant être désigné comme invalide est confirmé par ledit utilisateur comme n'étant pas sur ledit présentoir.

6. Le procédé selon la revendication 1, dans lequel le dispositif utilisateur est en mode en ligne pour pré-récupérer la liste d'images stockées et, une fois la pré-récupération terminée, le dispositif utilisateur fonctionne en mode hors ligne.

7. Le procédé selon la revendication 6, dans lequel, lorsqu'une connexion en ligne est disponible, les résultats de la validation sont téléchargés vers une base de données en ligne ou envoyés à celle-ci.
